# EUROPEAN PATENT APPLICATION

(11) **EP 4 825 628 A1**
(43) Date of publication of application: **21.10.2026**
(21) Application number: 26172704.4
(22) Date of filing: 16.04.2026
(51) Int. Cl.: B60K 11/08

(54) **IMPROVED FRONT PORTION OF A HEAVY VEHICLE**

(30) Priority: 16.04.2025 IT 202500008481
(71) Applicant: Iveco S.p.A., 10156 Torino (IT)
(72) Inventor: MORANO, Ivan Vito Antonio, 10156 TORINO (IT); ESPOSITO, Carmine Andrea, 10156 TORINO (IT)
(74) Representative: Studio Torta S.p.A.

(57) **Abstract**

Air guiding element (21) for a cab (3) of a commercial vehicle (1),comprising a plurality of portions (22, 23, 24) connected together and provided with an inner side (21") along a longitudinal axis (A) and an outer side (21') opposite to inner side (21''), wherein, in use, the outer side (21') is configured to cooperate at contact with a hood (4) of the vehicle (1).

## Description

### CROSS-REFERENCE TO RELATED APPLICATIONS

This patent application claims priority from Italian patent application no. 102025000008481 filed on April 16, 2025, the entire disclosure of which is incorporated herein by reference.

### TECHNICAL FIELD

The present invention concerns a front portion of a heavy vehicle.

The present invention finds its preferred, although not exclusive, application in commercial vehicles such as trucks. Reference will be made to this application by way of example below.

### BACKGROUND OF THE INVENTION

Commercial vehicles such as trucks comprises a cab configured to house both operative systems of the vehicle and driver's seat arrangement.

Driver's seat arrangement is placed, in the most common configuration also known as "cab over", above the operative systems also for sake of providing a great view field over the road.

Accordingly, cabs of commercial vehicles have a vertical extension greater with respect to passenger vehicles thereby having increased problems linked to aerodynamic drag.

Indeed, aerodynamic drag increases squarely with respect to the speed of the vehicle. Accordingly, the problem is particularly felt in commercial vehicles that are further at high speed on highways for long distances.

It is therefore clear that reducing vehicle drag would inevitably reduce fuel consumption and therefore increase the efficiency of the vehicle. Such aim is valid both for traditional internal combustion engines and for electric-traction vehicles or hydrogen-based traction vehicles.

Therefore, the need is felt to reduce aerodynamic drag of commercial vehicle thereby increasing the efficiency of the vehicle.

An aim of the present invention is to satisfy the above mentioned needs in a cost-effective and optimized manner.

### SUMMARY OF THE INVENTION

The aforementioned aim is reached by an air guiding element, a cab and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a cab of a commercial vehicle in an opened configuration and provided with the air guide element according to the invention; and

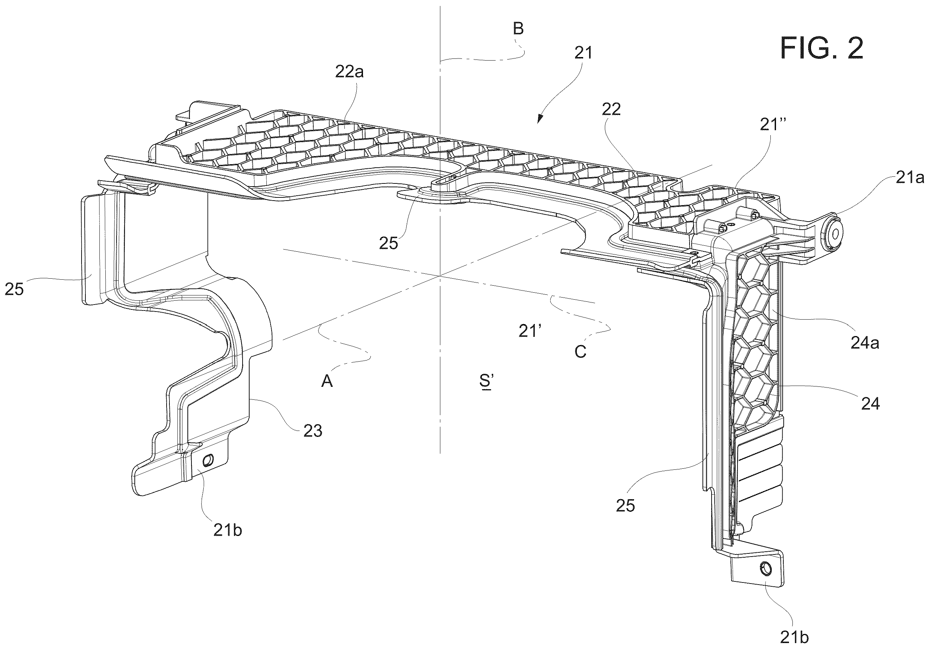

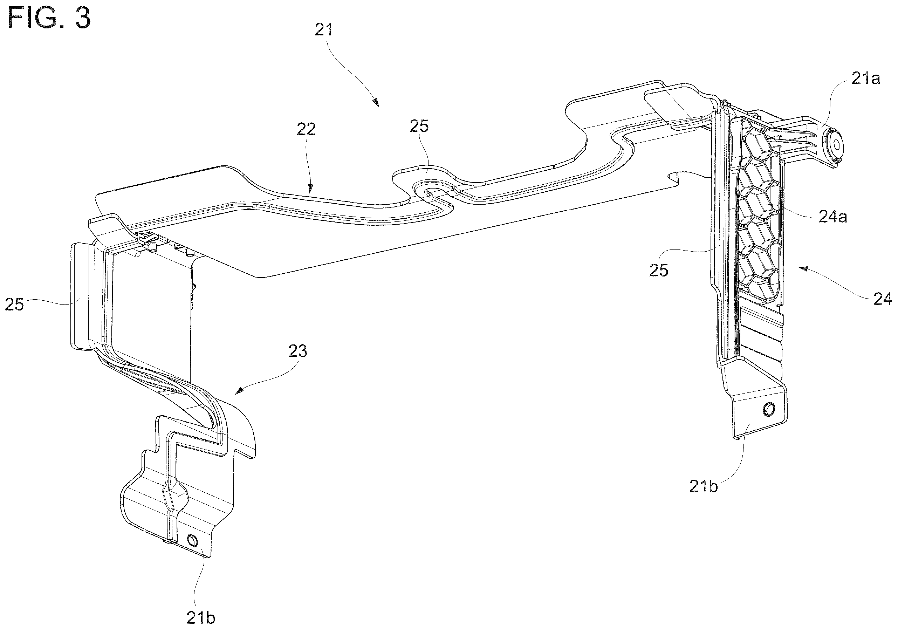

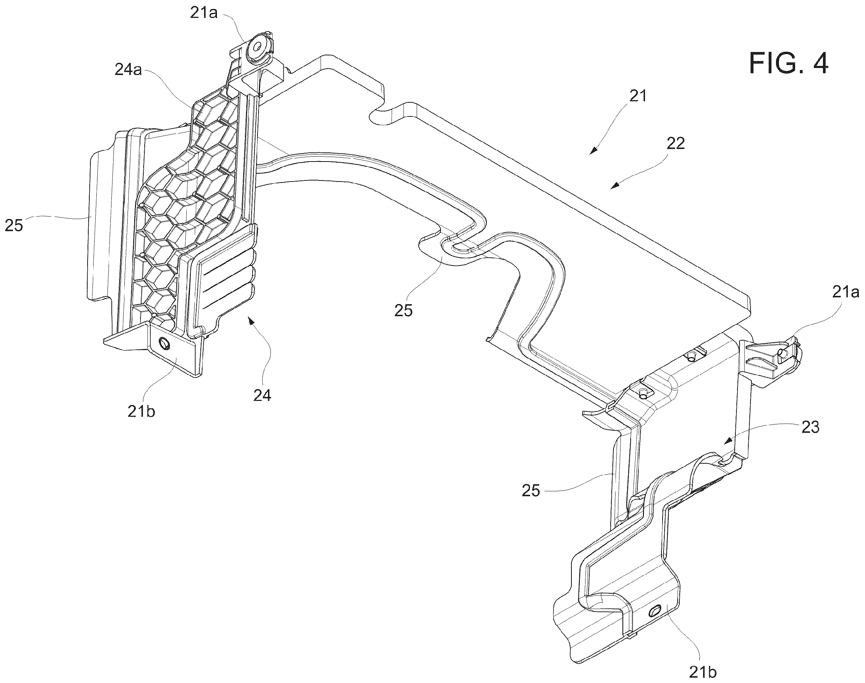

- Figures 2, 3 and 4 are respectively a front, a rear and a bottom rear perspective view of the air guiding element according to the invention.

### DETAILED DESCRIPTION OF THE INVENTION

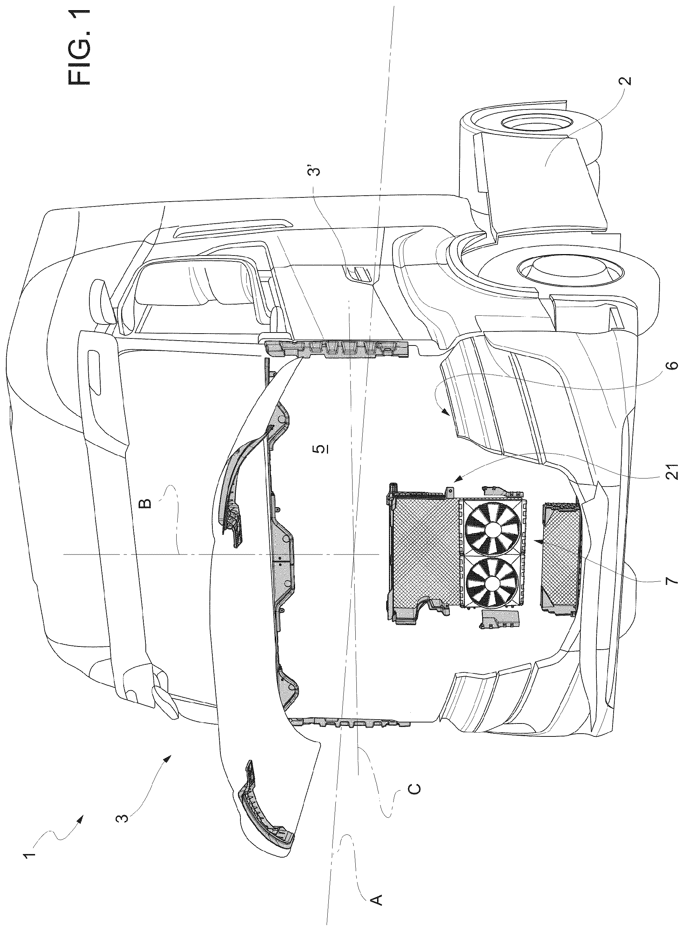

Figure 1 discloses a portion of a vehicle 1 such as a commercial vehicle, e.g. a truck, extending along a longitudinal axis A that coincides, in normal use, with driving direction of the vehicle 1, a transversal axis C and a vertical axis B.

In detail, vehicle 1 comprises a frame 2 and a cab 3 extending over the frame 2 along vertical axis B.

In particular, cab 3 comprises a hood 4 that is carried in a movable manner with respect to the body 3' of the cab 3 to assume a first configuration in which isolates a space 5 of cab 3 with respect to environment and a second configuration in which allows access to space 5 from the environment.

In detail, such hood 4 is linked to the body 3' of cab 3 by a movable connection (not shown) such as a hinge connection, configured to allow rotation of an upper portion of the hood 4 with respect to an axis parallel to transversal axis C.

The space 5 is therefore delimited by a perimeter 6 that matches with the shape defined by hood 4 in the first above mentioned configuration.

Space 5 may house different operative elements of the vehicle 1, in particular a portion of a traction system thereof, and in detail a heat management portion 7 comprising heat exchangers/ventilation means configured to cool down an operative fluid of the vehicle.

In particular, heat management portion 7 is placed in a central portion of the space 5 along transversal axis C and in particular extends along vertical axis B, starting from a lower edge of perimeter 6 and - in the disclosed embodiment - does not reach the upper edge thereof.

Advantageously, the cab 3 comprise a plurality of elements configured to direction the airflow impacting, during driving, on the hood 4 in order to reduce aerodynamic drag.

In detail, the elements can be carried by the hood 4 or by the body 3' of cab 3 along perimeter 6 of the space 5 or housed within space 5. In case such elements are carried body 3' or within space 5, they are preferably, in use, in contact with the hood 4.

In particular, the elements comprise:
- Sealing elements configured to avoid air passage through the hood 4 or between the hood 4 and the body 3 via space 5; and/or
- Guiding elements configured to channel and direction air passage through the hood 4 within space 5.

In particular, cab 3 comprises an air guiding element 21 configured to guide the air passage within the hood 4 towards a specific position within space 5.

In detail, guiding element 21 is carried by the body 3' within space 5, in particular it is fixed to the body 3' and cooperates at contact with hood 4 to channel air within a portion S' of space 5, in particular towards the heat management portion 7 housed here within.

Guiding element 21 is shaped to delimit a portion S' of space 5 since an inner edge 21" along longitudinal axis A cooperates at contact with the body 3' while an outer edge 21' cooperates, in use, at contact with the hood 4 thereby forcing air within portion S'.

In detail, guiding element 21 has a substantial π shape with the opening faced downwards along vertical axis B.

The guiding element 21 comprises three portions, namely a top portion 22 extending along transversal axis C and a pair of lateral portion 23, 24 extending along vertical axis B starting from opposite extremities of the top portion 22.

Advantageously, each portion 22, 23, 24 comprises an inner side that is substantially smooth and an outer side that is provided with a reinforced portion 22a, 23a, 24a comprising a pattern of ridges configured to increase mechanical resistance of the respective portion 22, 23, 24.

In particular, in the disclosed embodiment the reinforced portion 22a, 23a, 24a is a honeycomb structure.

Preferably, each portion 22, 23, 24 is realized as one piece. Furthermore, preferably, each portion 22, 23, 24 is realized in polymeric material, such as plastic.

In the disclosed example, the lateral portions 23, 24 are realized as separate element and connected to the central portion 22, e.g. via fixing means such as threaded elements.

The guiding element 21 furthermore comprises fixation points 21a, 21b configured to allow fixation to body 3. In the disclosed embodiment, such fixation points 21a, 21b comprises flanges configured to define a hole suitable for housing fixing means such as threaded elements.

Furthermore, in the disclosed embodiment, the fixation points 21a, 21b are carried by lateral portions 23, 24. In particular, in the disclosed embodiment, each lateral portion 23, 24 comprises an upper fixation point 21a and a lower fixation point 21b at vertical extremities of the lateral portion 23, 24.

In further detail, a first lateral portion 23 comprises an upper fixation point 21a proposed as a flange extending along longitudinal axis A and a lower fixation point 21b integrated in the first lateral portion 23 itself.

The second lateral portion 24 comprises both the upper and the lower fixation points 21a, 21b as flanges extending along longitudinal axis A.

Additionally, the aforementioned flanges defines openings that have centre axis that are parallel to different axis, i.e. the upper fixation points 21a are parallel to transversal axis C while the lower fixation points 31b are parallel to longitudinal axis A.

The guiding element 21 further comprises sealings 25 configured to be in contact with the hood 4 thereby locking air passage outside portion S' of space 5.

In particular, sealings 25 can be a polymeric, rubber, sealing, more in detail an extrusion sealing.

In detail, sealings 25 are provided at outer edge 21' to each of central and lateral portions 22, 23, 24.

It is furthermore noticed that in the disclosed embodiment the central portion 22 has a substantial rectangular shape with the inner edge being substantially linear and at the same quota along longitudinal axis A and the outer edge having an outer edge with a variable profile along longitudinal axis A.

Moreover, in the disclosed embodiment the first lateral 23 has a complex shape that varies extension along transversal and longitudinal axes C, A. furthermore, with the inner edge is substantially at the same quota along longitudinal axis A while the outer edge having an outer edge with a variable profile along longitudinal axis A.

Furthermore, in the disclosed embodiment the second lateral portion 24 has a substantial rectangular shape with both the inner and outer edge being substantially linear and at the same quota along longitudinal axis A.

The operation of the embodiment of the invention as described above is the following.

The guiding element 21 channels air towards the heat management portion 7, thereby at the same time increasing the air passing through this latter and therefore cooling down the operative fluid and reducing air drag due to passage of air through remaining portions of space 5.

In view of the foregoing, the advantages of the air guiding element, cab and vehicle according to the invention are apparent.

Thanks to the claimed guiding element, the air passage is channeled towards the required portion S' of space 5 thereby allowing at the same time maximizing air passage towards heat management portion 7 and avoiding the passage of air towards the perimeter of space 5.

In this way, drag is reduced and, moreover, efficiency of the heat management portion 7 increased. The two effects synergically acts to improve efficiency of the vehicle 1

In particular, the proposed shape is voted to allow housing of required operative systems while channeling air passage.

Furthermore, the realization in plastic material and in low pieces, e.g. by molding, allows cost-effective production of the guiding element.

In addition, the peculiar "honeycomb" structure allows to provide a robust structure that resists to the mechanical stresses, such as temperature and vibrations, occurring in such zone of space 5.

It is clear that modifications can be made to the described air guiding element, cab and vehicle which do not extend beyond the scope of protection defined by the claims.

For example, the cab of the vehicle may be different and similarly hood. Accordingly, the shape and opening/s of the portions of the vehicular element claimed may be different.

## Claims

1. Air guiding element (21) for a cab (3) of a commercial vehicle (1), said air guiding element (21) comprising a plurality of portions (22, 23, 24) connected together and provided with an inner side (21") along a longitudinal axis (A) and an outer side (21') opposite to said inner side (21"), wherein, in use, said outer side (21') is configured to cooperate at contact with a hood (4) of said vehicle (1).

2. Air guiding element according to claim 1, wherein said portions (22, 23, 24) are coupled to define a π shape opened downwards along a vertical axis (B)..

3. Air guiding element according to claim 1 or 2, wherein said portions (22, 23, 24) are realized as separated elements connected together.

4. Air guiding element according to any of the preceding claims, wherein said portions (22, 23, 24) are each realized as one piece.

5. Air guiding element according to any of the preceding claims, wherein said portions (22, 23, 24) are each realized in plastic material.

6. Air guiding element according to any of the preceding claims, wherein said portions (22, 23, 24) comprise an inner side that is smooth and an outer side that comprises a reinforced portion (22a, 23a, 24a).

7. Air guiding element according to claim 6, wherein said reinforced portion (22a, 23a, 24a) comprise a pattern of ridges.

8. Air guiding element according to claim 6 or 7, wherein said reinforced portion (22a, 23a, 24a) comprise a honeycomb structure.

9. Air guiding element according to any of the preceding claims, comprising a sealing (25) carried by said outer edge (21').

10. Air guiding element according to any of the preceding claims, comprising fixation points (21a, 21b) configured to fix said air guiding element (21) to said body (3').

11. Air guiding element according to claim 10, wherein said fixation points (21a, 21b) are carried by said lateral portions (23, 24).

12. Cab (3) of a commercial vehicle (1) comprising a body (3') and a hood (4) connected to the body (3') by a movable connection to selectively allow or deny access to a space (5) realized in said body (3'), said cab (3) being provided with an air guiding element (21) according to any of the preceding claims, said air guiding element (21) being configured to channel air coming through said hood (4) within a portion (S') of space (S).

13. Cab according to claim 12, wherein said air guiding element (21) is carried by said body (3') and cooperates at contact, in use, with said hood (4) at the outer edge (21') thereof.

14. Vehicle (1) comprising a cab according to claims 12 or 13.
